# EUROPEAN PATENT APPLICATION

(11) **EP 3 907 937 A1**
(43) Date of publication of application: **10.11.2021**
(21) Application number: 18857415.6
(22) Date of filing: 31.12.2018
(51) Int. Cl.: H04L 12/58, G06F 21/33, G06Q 10/10, G06Q 50/18, H04L 9/32, H04L 29/06, H04W 4/14

(54) **UNIVERSAL CERTIFIED AND QUALIFIED CONTRACTING METHOD**

(71) Applicant: Lleidanetworks Serveis Telemàtics, S.A., 25003 Lleida (ES)
(72) Inventor: SAPENA SOLER, Francisco Jose, 25003 Lleida (ES)
(74) Representative: Dehns
(86) International application number: PCT/ES2018/070844
(87) International publication number: WO 2020/141232

(57) **Abstract**

The object of the invention enables a telecommunications operator or electronic communications provider or e-delivery provider to send contracts by email to one or several recipients, by using certified email or certified SMS, certifying the content of the contract, verifying whether the recipient has a qualified digital signature for use in the contracting processing. In the event that they do not have a qualified digital certificate, a short-term one is generated based on their authentication by means of online verification of their identity documents and biometric verification of their face. All by using a video server from which captures are taken of the video streaming, resending the communication to a contracting server wherein the contract can be verified, accepted or not, and proof of the transaction can be generated as communication operator.

## Description

### OBJECT OF THE INVENTION

The object of the invention falls within the field of information and communication technologies.

The invention is aimed at a method intended so that any user can establish a qualified contracting, that is, with a digital certificate or qualified electronic signature, regardless of their initial status and whether they have a certificate, generating evidence documentation of participants, mailing, receipt and content of the electronic documents.

### BACKGROUND OF THE INVENTION

Digital certification and contracting has been around for a number of years; however, there is general confusion among the key players in the world of digital certification between the CA (Certification Authority), simple electronic signatures, advanced electronic signatures, qualified electronic signatures, e-delivery providers, certification processes, the processes that are certifiable and the different methods. Moreover, digitally signed documents only include information about who signed them and keep the content thereof unchanged, but do not contain the information regarding the mailing thereof, the delivery thereof, the acceptance or not thereof, whether other digital means are used to accept and to digitally sign a contract.

It is understood that it is necessary to be able to provide the greatest legal security to both the contracting party and the contractor; and the best way of doing this is for at least the signature of the contracting party to be qualified, that is, with an electronic signature that fully identifies them since the contractor or provider party is identified by the e-delivery provider or certifier of the transaction, all within the electronic identification and trust services framework, known as (eIDAS). However, in the majority of cases, the client does not have a qualified digital certificate or qualified electronic signature in their terminal or if they do have one, it is installed in another terminal and they do not know how to implement it.

Even the case arises that the user wishing to contract the service has a digital certificate, but it is not compatible and prevents this contracting.

Today there are developments aimed at the world of certification and certified digital contracting, such as for example the document WO2018231255 or document TWI636415 which describe a solution based on blockchain meaning that the certificates or issuer or receiver trust underpin the blockchain itself but does not enable, among others, the content of the contract to be certified.

Therefore, it is necessary to resolve the aforementioned drawbacks such that there is a record of all the steps performed and such that it can be reliably proven at all times which parties are involved in the contracting process and when, how and to what extent the contracting process was successful.

### DESCRIPTION OF THE INVENTION

The object of the invention enables the aforementioned drawbacks to be resolved by generating qualified digital signatures in real time, under demand and online by using a video system for identifying the person and their official documentation, verifying it in real time, generating it through a CA, with the characteristic that the service life of this qualified digital signature is limited to the time necessary to perform the contracting, such that the process can be initiated at any time by both email and SMS; a record being made of all the step performed in order to demonstrate at all times who the participating parties are in the contracting service and when and to what extent to contracting process was successful, as well as how said process was performed.

According to the foregoing, the method object of the invention provides the advantage that the evidence and digital certificates used can come from different CA or certification authorities and, if the user does not have any, generate a short-term digital certificate only for the transaction, lastly packaging all the evidence of the contracting, generating the evidence documentation of the entire contracting process and being able to meet the robust and qualified identification requirements of the contractor and contracting party.

Likewise, a platform for the certification of electronic contracts is an aspect of the invention, this platform being implemented by means of a telecommunications operator using a series of interconnected servers. In this way, it is held that the platform can have a configuration such that it implements:
- A contracting server that implements email contracting systems (Conectaclick Server).
- An email management server with evidence collection (Mailcert Server).
- A database sever that stores the content of the original email (Mailcert Database Server).
- A TSU time stamp server.
- A server for generating evidence collected during the contracting service (TSA Server).
- A validation server responsible for ensuring the identity of the recipient by using a digital certificate contained in the browser of the receiving recipient (identity verification server).
- A certified message server, responsible for sending messages.
- A server responsible for extracting data and verifying presented identity documents.
- A RTC video server that enables the generation and control of video streaming.
- A server for storing the data extracted from the presented documents.
- A CA (Certification Authority) server that generates the short-term qualified certificates based on the collected information.
- A generated document server intended to store the final electronic contracting certificates generated by the server for generating documents comprising all the details of the transaction.

It must be noted that as the platform is linked to a telecommunications operator (or communications operator throughout this document), and preferably implemented in the same, this enables certification tasks to be performed without the need for network entities external to the communications operator.

In light of the foregoing, it is held that the method object of the invention refers to a process in which a telecommunications operator or an electronic communications provider (e-delivery provider) can send contracts by messaging, such as by email, to one or several recipients, certifying the content of the contract and with a link to a server that verifies the digital certificate of the recipient and their identity. If they do not have a digital certificate, a new one is generated with a certification authority by means of identifying the person and their identity documents, preferably by means of motion picture capture or video, resending the communication to a contracting server wherein the contract can be verified, accepted or not and evidence of the transaction can be generated as communications operator. This evidence document contains the contract, the contracting entity, the certificate of the contracting entity, their explicit authorisation and all the transaction data required to prove the transaction.

The object of the invention provides a method for the certification of contracting carried out electronically by using robust identification at both ends; at the client end by means of a prior digital certificate or short-term digital certificate generated under demand, with a maximum duration of 24 hours and preferably 1 hour, which is generated by the CA (Certification Authority), and at the provider end by means of contracting the service of the e-delivery provider, the communications operator or the telecommunications operator, certifying all the evidence of the electronic transactions.

According to the foregoing, the object of the invention is a certified electronic contracting method with the characteristic of using an electronic signature generated, preferably under demand, by a CA (Certification Authority) through the identification of the contracting party by means of an analysis of their identity document, e.g. passport by means of data capture thereof through an image and/or video server and an identity document verifier; to do so, an image is captured (preferably in video) of the document such that there is a static or motion image (video streaming) of the front and back of the cited identity document such that data can be extracted from the identity document based on said image in order to, based on said data, be able to certify the entire process by means of a telecommunication operator or a telecommunications provider, which can also be referred to as communications provider or electronic communication provider, this always being an e-delivery provider.

The described process is based on the extraction of data from the identity document such as the extraction of text by means of OCR techniques or similar while the identifying image comprised in the identity document is extracted and analysed in order to subsequently compare it to an image captured of the user who is the holder of the identity document so as to, by means of processing both, be able to carry out a verification, preferably by comparison, of both and verify the identity of the holder and thus relate it to the data extracted by means of OCR of the document; finding them to be valid.

Lastly, the client of the issuing electronic communication provider or operator receives a certificate in accordance with whether the contracting has been accepted and carried out or not, including the original email, the contract, date, time and traceability of the same, a unique transaction number, and the electronic signature used with the short-term certificate of the CA (Certification Authority).

The method of the invention can be used to certify contracts and the content thereof and can be implemented by using both email and SMS messages.

### DESCRIPTION OF THE DRAWINGS

In order to complement the description being made and with the object of helping to better understand the characteristics of the invention, in accordance with a preferred practical exemplary embodiment thereof, said description is accompanied, as an integral part thereof, by a set of drawings where, in an illustrative and non-limiting manner, the following has been represented:
Figure 1.- Shows a flow diagram representing an embodiment of the method of the invention aimed at an electronic transaction related to an electronic contract, the process being initiated by the issuing entity in order to introduce the target data and the data to be verified for the contracting.
Figure 2.- Shows a flow diagram representing an embodiment of the method of the invention aimed at an electronic transaction related to an electronic contract, the process being initiated by means of a certified SMS or an SMS.
Figure 3.- Shows a flow diagram representing an embodiment of the method of the invention aimed at an electronic transaction related to an electronic contract, the process being initiated by means of a certified email or an email.
Figure 4.- Shows a flow diagram representing an embodiment of the method of the invention aimed at an electronic transaction related to an electronic contract, the process being initiated when there is no digital certificate in the smartphone and one must be generated for the contracting process.

### PREFERRED EMBODIMENT OF THE INVENTION

The method for electronic contracting object of the invention can be implemented in a platform linked to a communications provider, also object of this invention, and accessible to a receiving entity or a receiver and an issuing entity or issuer; through respective devices (such as a smartphone or computer or the like), a series of interconnected servers, defined as:
- A contracting server which we refer to as Conectaclick server, thus named as it is a solution that implements electronic contracting systems such as electronic contracting systems indistinctly using email, web and SMS, the contracting server being closely linked to the telecommunications provider or being part of the same.
- An email management server which we refer to as Mailcert, which is a server that enables email management with evidence collection based on the same, this evidence includes, among others: headings, body and attachments thereof.
- A Mailcert database server, which stores the content of the original email, including headings, body and attachments, the tracking portions or log corresponding to the mailing and the resolution information of the target email server. It stores the historic data.
- A qualified Time Stamp Unit or TSU server, which is a time stamping system implemented in situ offered by a Certification Authority (CA) for time stamping the evidence documents, preferably PDF, generated by the certification systems. This server is preferably located in the infrastructure of the telecommunications operator, but in some cases, if required, it can be a third party entity and therefore be physically located outside the infrastructure of the telecommunications operator, in turn being able to have an identity server defined by a third party which is responsible for carrying out all the data management tasks, and eventually extracting them from the video streaming or images of the identifying documents.
- A server for generating evidence which we refer to as TSA server, which is a server for generating documents, preferably in PDF format, comprising evidence from the collection thereof during the contracting process.
- A validation server which we refer to as Digital Identity Verification Server, which is a server responsible for verifying the identity of the recipient by using a digital certificate contained in the browser of the receiving recipient.
- A certified message server, responsible for sending messages from the issuer of the contract to the receiver of the contract, preferably SMS, certified for the GSM network in the event that implementation by means of SMS is selected.
- An identity document verification server which is responsible for determining what type of identity document the user has shown, whether the selfie photo corresponds to that of the document and whether the integrity of the document is compliant in order to prevent forgeries. To do so, data capture means of the devices of at least the contracting party are used.
- A WebRTC Video server which generates the video stream from where the images of the identifying documents of at least the contracting party or receiving user and the selfie photos that are used in the identity document verification server are captured.
- eKYC *(Know Your Customer)* data server wherein the data extracted from the identifying documents are stored.
- A CA server wherein short-term digital certificates are generated for use in signing contracts for a time period no longer than 24 hours.
- A generated document server responsible for storing the electronic contracting certificates generated by the CA server.

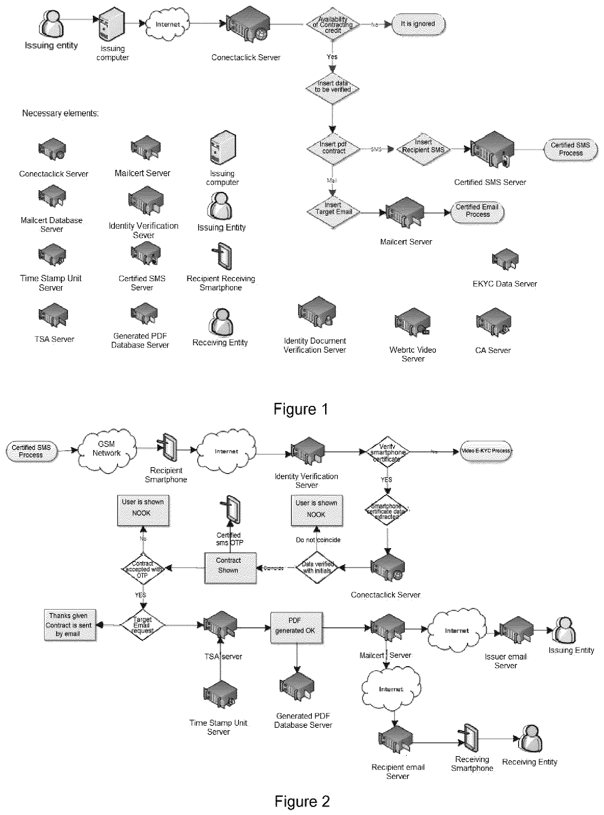

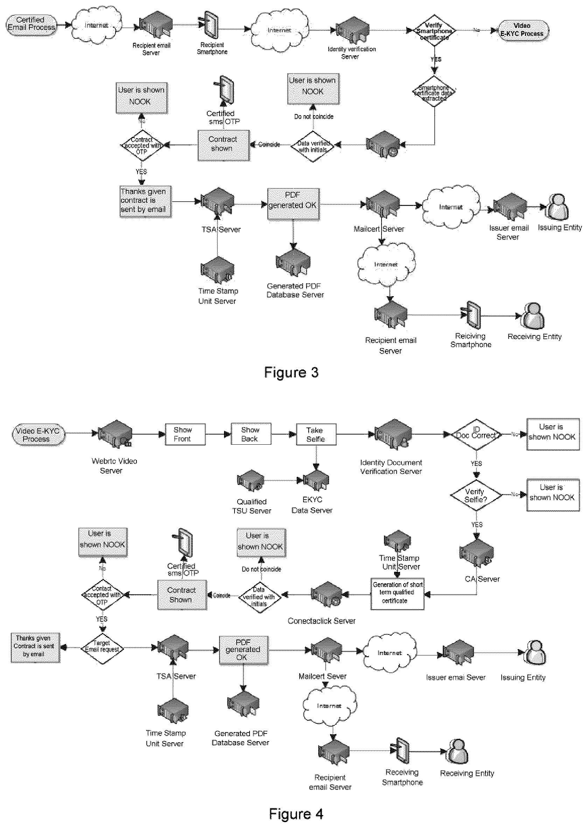

The method for the certification of a universal qualified electronic contracting of the invention has four possible embodiments that are mainly differentiated from each other by the type of message comprising the contract and which is sent from the issuer:
- By the use of certified SMS messages with the availability of a digital certificate in the smartphone, as derived from figure 2.
- By the use of certified email messages with the availability of a digital certificate in the smartphone, as derived from figure 3 (hereinafter certified email).
- By the use of certified SMS messages without the availability of a digital certificate in the smartphone and immediately generating it with identity verification by means of video, identity documents and biometric verification based on at least one photo, as derived from figure 4.
- By the use of certified email messages without the availability of a digital certificate in the smartphone and immediately generating it with identity verification by means of video, identity documents and photo biometric verification, as derived from figure 4.

In this way, it is held that the method of the invention enables the generation of a certified electronic contract to be carried out, wherein the issuing entity, through an issuing electronic device such as the computer thereof, accesses the contracting server (server referred to as conectaclick) by means of access to a data network such as the Internet, identifying themselves as the issuer.

Once the issuing entity has been authenticated (using i.e. data related to the identifying document in possession of the contractor) he indicates the electronic contract (hereinafter contract) and any data (such as telephone number or email address of the receiver) related to the receiver; which throughout this document may be referred as receiver or recipient/target. The selection of one type of message or the other shall determines the steps to be followed, as such it is held that:
- If a telephone number is introduced, a certified SMS is sent through a certified SMS server and the certified SMS process is initiated.
- If an email is introduced, a certified email is sent through the Mailcert server and the certified email process is initiated.

The certified SMS process is initiated when the message is received in an electronic device of the receiving recipient, which has data access and communication capacity, such as a smartphone; said message contains a URL (Internet address) which redirects to a digital identity verification server where it is determined whether the smartphone has a valid digital signature for signing.

The certified SMS process continues with the receiving recipient accessing said URL, wherein the digital identity verification server requests a digital certificate, from among the possible ones stored in the browser of the receiving device, to be used in the transaction.

If a digital certificate is not available, is not valid or cannot be accessed, the digital identity verification server redirects to the process illustrated in figure 4, wherein a WEBRTC video server initiates an image capture of video streaming, indicating the user to show their official documentation, which can be a passport or official identity document necessary to identify them. The server indicates them to show the front and back while at least one image is captured of a part of the body, such as the face, eyes, ear, fingerprint, etc. By way of preferred embodiment, the method object of the invention comprises obtaining a photo of the face of the receiver that can be generated by taking a selfie photo. The system takes photos of the video streaming and sends them to an identity document verification system, which verifies the authenticity of the documents based on the parameters in the document.

If the parameters are not correct or do not coincide with the verification parameters thereof, the user is notified that they are not correct and the user is informed that they cannot continue.

Likewise, a subsequent verification is carried out of at least the face by means of biometrics if the face comprised in the selfie photo corresponds to the photo in the document, preferably by means of matching techniques. If the range of similarity is too low, the user is notified that they cannot continue. Lastly, if the verification of the identity of the user by means of their document and by means of their selfie are accepted by the system, the CA server generates a short-term digital certificate, specifically for the contracting session, to which a first time stamp is added.

Once the digital certificate is generated, it is passed to the digital contracting server referred to as Conectaclick, which verifies whether it coincides with the initial parameters indicated by the issuing entity. If they coincide, the contract is shown to the user, who preferably signs with a key word generated and provided by means of an SMS specifically for the session.

If the key word (OTP, one time password) is introduced, it is understood that the contract is explicitly accepted.

Then, the user is asked where they wish to send the accepted contract, they are thanked for the operation and they are notified that it will be sent by email, at which point it is passed to the TSA generator which generates the final evidence document wherein all the parameters, the short-term digital certificate, the first time stamp, the text of the accepted contract, the OTP sent to accept the same and generally all the connection data are introduced so that it is the document with all the evidence of the operation.

Lastly, it passes to a MAILCERT server, which is responsible for sending the generated evidence document to both the issuer and the receiver.

In the embodiments in which the method uses certified mail or certified email, the method is similar and is initiated when an incoming mail server of the recipient receives the initially sent certified email, wherein said certified email can contain a contract to be signed, but that contains a URL (Internet address) which redirects to a digital identity verification server that requests a digital certificate, from among the possible ones stores in the browser of the receiving device, to be used in the transaction.

If a digital certificate is not available, is not valid or cannot be accessed, the digital identity verification server redirects to a process for obtaining images such as the E-KYC video process described in figure 4, wherein a WEBRTC video server can initiate a video streaming, indicating the user to show their identifying documentation, which can be a passport or official identity document for use as an identifying documentation corresponding to the receiver in order to thus identify them. The server indicates them to show the front and the back, and for preferably at least one photo to be taken of a part of the body, such as the face, although in possible alternative embodiments of the object of the invention different biometric recognition techniques can be used, such as those based on the iris, ear (for example, while a smartphone is being used, the camera thereof is oriented towards the ear of the user of the terminal while talking) or fingerprint, likewise allowing for the implementation of biometric systems already present in the electronic device of the receiver, such as fingerprint readers or techniques based on image capture means. The system takes photos of the video streaming and sends them to an identity document verification system, which verifies the authenticity of the documents based on the parameters in the document.

Then it is verified by means of biometrics whether the face of the selfie corresponds to the photo in the document, if the parameters are not correct or do not coincide with verification parameters, the user is notified that they are not correct and the user is informed that they cannot continue. If the range of similarity between the photos of the document and the user is too low, the user is also notified that they cannot continue. It must be noted that when it is considered negative or too low, this determination is based on various techniques and we shall disclose those known in the prior art that can be used in this invention by way of a threshold or to determine the validity, the methodology to be used not being an object of the invention.

Lastly, if the verification of the identity of the user by means of verifying their document and photo, preferably a selfie, are accepted by the system, the CA server generates a short-term digital certificate, specifically for the contracting session, to which a first time stamp is preferably added.

Once the digital certificate is generated, it passes to the conectaclick digital contracting server, which verifies whether it coincides with the indicated initial parameters, that is in an embodiment based on an identity document, this event comprises comparing and verifying the document proposed by the contractor with the data of the same that the contracting party has, for example: National Identity Document (DNI) (contractor)<->data of the contracting party of the DNI (contractor); if they coincide, the contract is shown to the user, who has to sign with a key word generated by SMS specifically for the session, defining a OTP (One Time Password).

In order to accept the contract, the key word (OTP, One Time Password) is introduced meaning it is explicitly indicated that the contract is accepted. Then, the user is asked where, to which target server address for message receipt, they wish to send the contract once it is accepted to the issuing user, and it is mailed preferably by means of email, from where it passes to the TSA generator server which generates a final evidence document wherein at least the short-term digital certificate, the first time stamp, the content of the contract -preferably by way of legible text-, of the accepted contract, the key word sent to accept the same and generally all the connection data such as time, sending identity, servers through which the contract has circulated, are included in order to generate the document containing all the evidence necessary relating to the operation.

Once completed, the resulting certificate or final evidence document is signed with the digital signature of the communications provider and a second time stamp is preferably added through a time stamp server (TSU server). The generated certificate is sent to a Mailcert server responsible for transmitting the email, sending two copies of the certificate of the signed contract and all the generated evidence, one to the issuing entity, and another to the receiving entity, which are received by the respective email servers to be collected by the respective users thereof.

## Claims

1. A universal certified and qualified contracting method of a contract issued by an issuer to be signed by a receiver, which comprises:
• generating, by an issuer, a message that in turn comprises at least the contract, and data of a receiver of said contract,
• certifying the content of the contract, and
• sending said message to a receiver,
the method being **characterised in that** it comprises:
• determining whether the receiver has a digital certificate, it is valid and can be accessed,
• initiating an identity verification process of the receiver when in the previous step it is determined that the receiver does not have a digital certificate, it is not valid or it cannot be accessed, wherein said identity verification process of the receiver in turn comprises:
i. initiating an image capture corresponding to: identifying documentation corresponding to the receiver and a viewing wherein at least one part of the body of the receiver is assessed, preferably the face,
ii. carrying out a verification of the identity of the receiver based on the photo of the face and the official documentation,
• generating a digital certificate with a validity period no greater than 24 hrs., specifically for the contracting session,
• adding a first time stamp, stamping the short-term digital certificate with said first time stamp,
• showing the contract to the receiver and sending to the receiver via SMS a key word by way of temporary OTP such that an acceptance is generated by the receiver of the contract by means of the insertion of said key word,
• generating a final evidence document comprising:
▪ the short-term digital certificate,
▪ the first time stamp,
▪ the content of the contract, preferably by means of legible text,
▪ the key word by way of temporary OTP,
▪ time, and
▪ sending identity,
• signing the final evidence document by means of a digital signature, and
• sending a first copy of the digitally signed final evidence document to the issuer and sending a second copy of the digitally signed final document to the receiver.

2. The method according to claim 1, wherein the message generated by the issuer is a certified SMS or a certified email.

3. The method according to claim 1, wherein the image capture is carried out based on video streaming indicating the receiver to show an official documentation and at least one photo of a part of the body of the receiver for the capture thereof in the video streaming, extracting photos of the official documentation from the video streaming and at least one photo of the part of the body of the receiver.

4. The method according to claim 1, **characterised in that** it comprises adding a second time stamp to the final evidence document before it is sent.

## Amended claims

### Amended claims under Art. 19.1 PCT

1. A universal certified and qualified contracting method of a contract issued by an issuer to be signed by a receiver, which comprises:
• generating, by an issuer, a message that in turn comprises at least the contract, and data of a receiver of said contract,
• certifying the content of the contract, and
• sending said message to a receiver,
the method being **characterised in that** it comprises:
• determining whether the receiver has a digital certificate, it is valid and can be accessed,
• initiating an identity verification process of the receiver when in the previous step it is determined that the receiver does not have a digital certificate, it is not valid or it cannot be accessed, wherein said identity verification process of the receiver in turn comprises:
i. initiating an image capture corresponding to: identifying documentation corresponding to the receiver and a viewing wherein at least one part of the body of the receiver is assessed, preferably the face,
ii. carrying out a verification of the identity of the receiver based on a comparison of the image capture and the official documentation,
• generating a short-term digital certificate for the contracting session, with a validity period no greater than 24 hrs
• adding a first timestamp, stamping the short-term digital certificate with said first timestamp,
• showing the contract to the receiver and sending to the receiver, via SMS, a keyword by way of temporary OTP such that an acceptance is generated by the receiver t signing the contract with said keyword d,
• generating a final evidence document comprising:
▪ the short-term digital certificate,
▪ the first timestamp,
▪ the content of the contract, preferably by means of legible text,
▪ the keyword by way of temporary OTP,
▪ time, and
▪ verified identity,
• signing the final evidence document by means of a digital signature generating a certificate of the signed contract, and
• sending:
• a first copy of the certificate of the signed contract to the issuer, and
• a second copy of the certificate of the signed contract to the receiver.

2. The method according to claim 1, wherein the message generated by the issuer is a certified SMS or a certified email.

3. The method according to claim 1, wherein the image capture is carried out based on video streaming indicating the receiver to show an official documentation and at least one photo of a part of the body of the receiver for the capture thereof in the video streaming, extracting photos of the official documentation from the video streaming and at least one photo of the part of the body of the receiver.

4. The method according to claim 1, **characterised in that** it comprises adding a second time stamp to the final evidence d
